# EUROPÄISCHE PATENTSCHRIFT

(11) **EP 0 557 706 B1**
(45) Veröffentlichungstag und Bekanntmachung des Hinweises auf die Patenterteilung: **28.02.1996**
(21) Anmeldenummer: 93100654.8
(22) Anmeldetag: 18.01.1993
(51) Int. Cl.: F16H 63/08

(54) **Gangschaltgetriebe eines Kraftfahrzeugs**
Gearbox for a motor vehicle
Boîte de vitesse pour une voiture

(30) Priorität: 25.02.1992 DE 4205670
(43) Veröffentlichungstag der Anmeldung: 01.09.1993
(73) Patentinhaber: Dr.Ing.h.c. F. Porsche Aktiengesellschaft, D-70435 Stuttgart (DE)
(72) Erfinder: Müller, Robert, W-7256 Mönsheim (DE)

(56) Entgegenhaltungen:
- EP-A- 0 179 544
- DE-A- 2 235 368
- FR-A- 2 500 101

## Beschreibung

Die Erfindung betrifft ein Gangschaltgetriebe eines Kraftfahrzeugs nach dem Oberbegriff des Anspruchs 1. Ein derartiges aus der US-A-4 409 858 bekanntes Gangschaltgetriebe wird mit einer Schaltwalze betätigt. Dieses ein Vorschalt-, ein Hauptschalt- und ein Nachschalt- getriebe aufweisende Gangschaltgetriebe erlaubf das Schalten von 16 vorwärts-und Rückwärtsgängen und wird bei Traktoren und Gabelstaplern eingesetzt. Hierbei wird zunächst das vorschalt- und Nachschaltgetriebe betätigt, um anschließend mit einer synchronisierkupplung im Hauptschalt- getriebe einen Gang einzulegen. Hierbei ist eine komplizierte Schaltvorrichtung nötig ist, um von den höheren Getriebegängen direkt in den Leerlauf zu schalten.

Es ist die Aufgabe der Erfindung, ein Gangschaltgetriebe zu schaffen, das einfacher und funktionssicherer schaltbar ist.

Zur Lösung dieser Aufgabe dienen die kennzeichnenden Merkmale des Anspruchs 1. Wenn alle Getriebegänge nur durch gleichzeitiges Schließen zweier Synchronisierkupplungen schaltbar sind, wird es möglich, die Schiebemuffe mindestens einer Synchronisierkupplung unabhängig von der jeweiligen Stellung der Schaltwalze in Neutralstellung und umgekehrt aus der Neutralstellung in die von der Schaltwalze vorgegebene Position zu bringen.

Weitere, die Erfindung ausgestaltende Merkmale enthalten die Unteransprüche. Ein Ausführungsbeispiel der Erfindung ist in der Zeichnung dargestellt und wird nachfolgend erläutert.

Es zeigen:

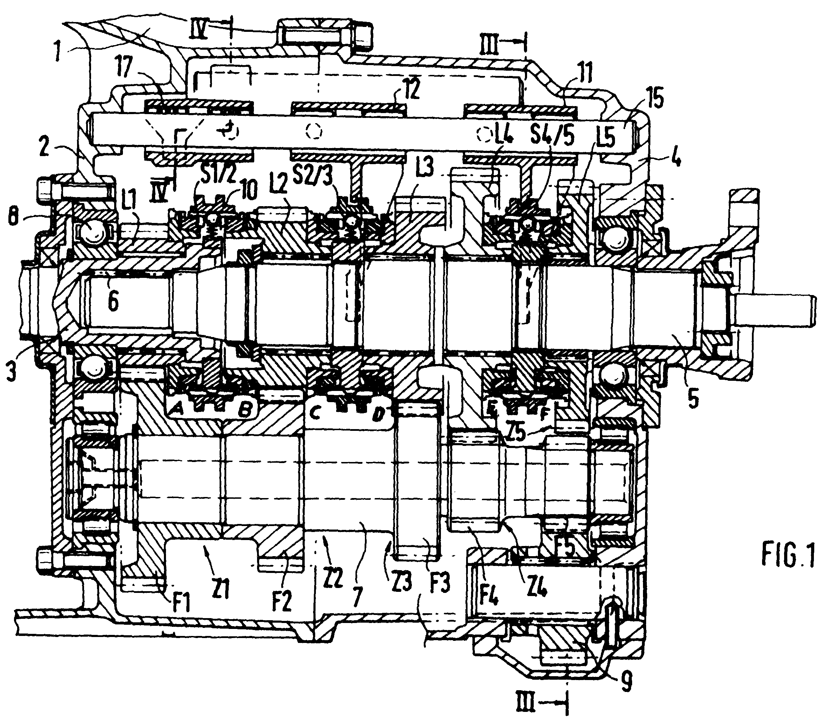

- Fig. 1: Längsschnitt eines Gangschaltgetriebes,

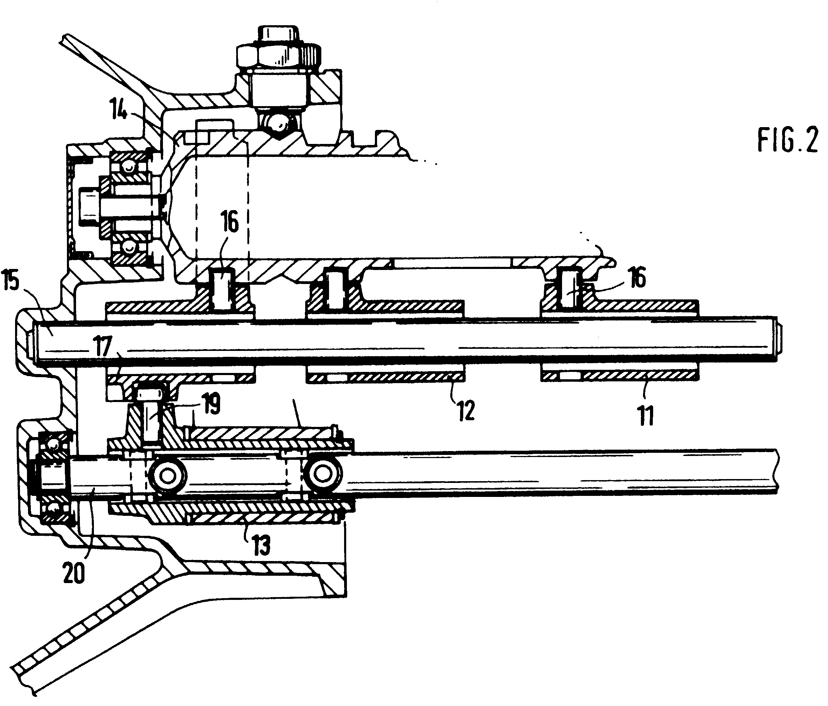

- Fig. 2: Längsschnitt nach Linie II-II der Fig. 1,

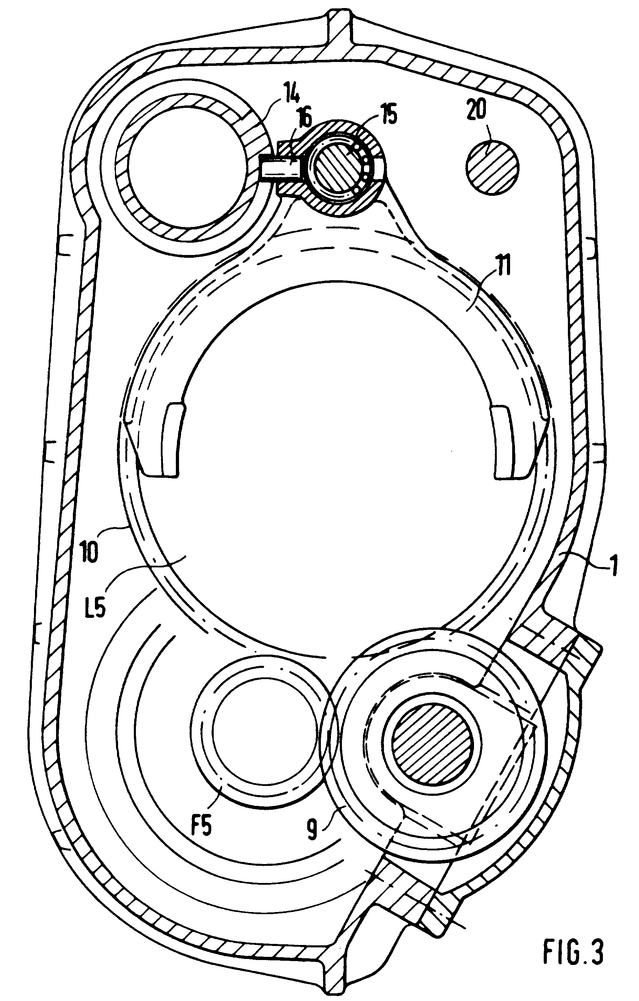

- Fig. 3: Querschnitt nach Linie III-III der Fig. 1,

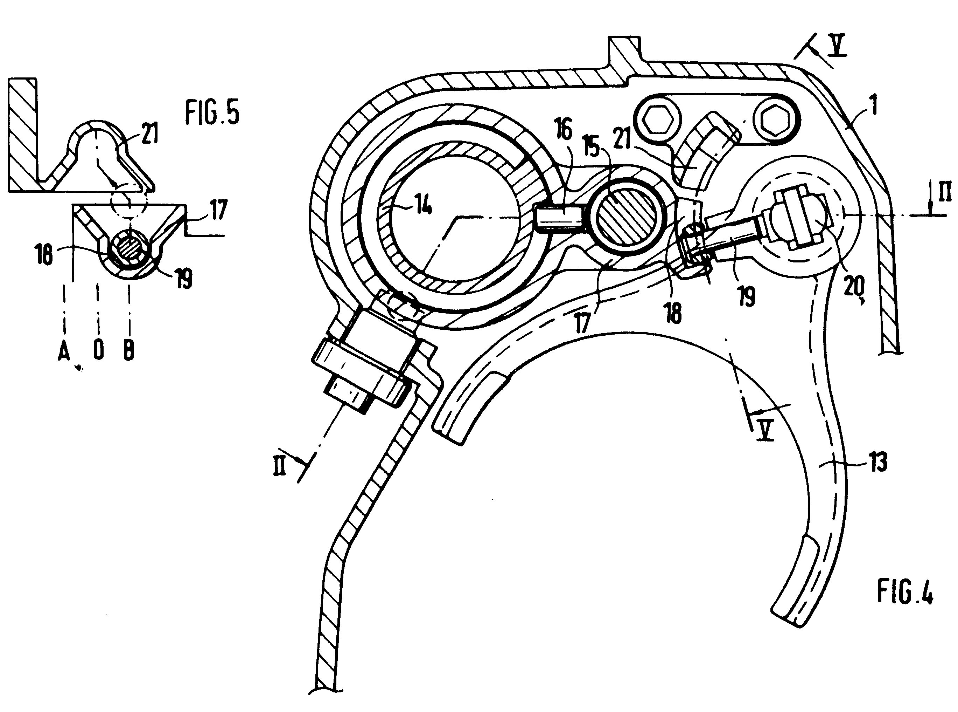

- Fig. 4: Querschnitt nach Linie IV-IV der Fig. 1,
- Fig. 5: Abwicklung in Ebene V-V von Fig. 4.

Ein Gangschaltgetriebe eines Kraftfahrzeugs mit sechs Vorwärtsgängen und einem Rückwärtsgang ist von einem Getriebegehäuse 1 umschlossen. In der einen Stirnwand 2 des Getriebegehäuses ist eine Eingangswelle 3, in der anderen Stirnwand 4 eine Ausgangswelle 5 gelagert. Die Ausgangswelle 5 ist an ihrer anderen Seite nahe der Stirnwand 2 in einem Nadellager 6 zentrisch in der hohlgebohrten Eingangswelle 3 gelagert. Parallel zur Eingangswelle 3 und Ausgangswelle 5 Ist im Getriebegehäuse 1 eine Nebenwelle 7 gelagert, auf der alle Festräder F der jeweils aus einem Losrad L und einem Festrad F bestehenden Zahnradpaare Z1, Z2, Z3, Z4 und Z5 sitzen.

Das Losrad L1 von Z1 ist auf der Eingangswelle 3 gelagert und am Kugellager 8 der Eingangswelle 3 axial abgestützt. Die übrigen Losräder L2, L3, L4, L5 sind auf der Ausgangswelle 5 gelagert und kämmen mit den Festrädern F2, F3, F4, F5, wobei das Losrad L5 für den Rückwärtsgang R über ein Zwischenrad 9 mit dem Festrad F5 in Eingriff steht, um eine Drehrichtungsumkehr zu erhalten. Die Losräder L2, L3, L4, L5 sind mittels handelsüblicher, gleichgestalteter Synchronisierkupplungen mit der Ausgangswelle 5 kuppelbar, das Losrad L1 ist mit der Eingangswelle 3 kuppelbar.

Mit einer Synchronisierkupplung S 1/2 ist in ihrer linken Schließlage A das Zahnradpaar Z1, in ihrer rechten Schließlage B das Zahnradpaar Z2 gekuppelt. Eine Synchronisierkupplung des S 2/3 kuppelt in Schließlage C das Zahnradpaar Z2 in Schließlage D das Zahnradpaar Z3. Eine weitere Synchronisierkupplung S 4/5 kuppelt in Schließlage E das Zahnradpaar Z4, in Schließlage F den Radsatz Z5 des Rückwärtsganges. Um einen der Getriebegänge G1, G2, G3, G4, G5, G6 oder R zu schalten, werden jeweils zwei Synchronisierkupplungen in Schließlage gebracht. Aus nachfolgender Tabelle wird deutlich, welche Schließlage zum Schalten der Getriebegänge realisiert sind. Auch die Gangübersetzungen i und Stufensprünge ϕ sind daraus beispielhaft ersichtlich. Die Gesamtspreizung ψ des Gangschaltgetriebes beträgt 5,2.

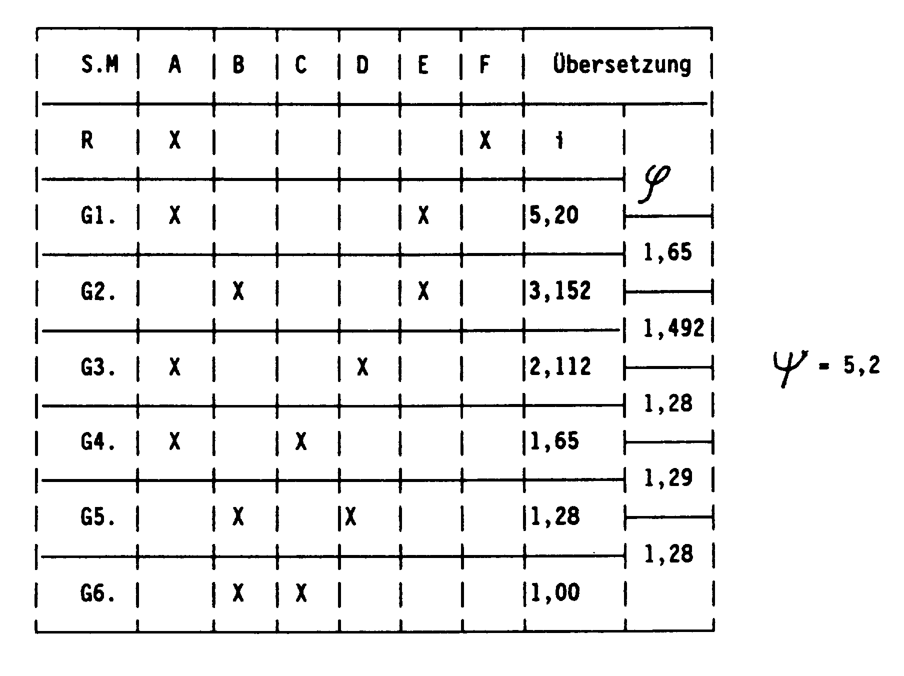

Zum Schalten der fünf unteren Getriebegänge G1 bis G5 und des Rückwärtsganges R sind jeweils zwei Zahnradpaare erforderlich. Zum Schalten des 6. Ganges G6 wird das Losrad L2 mittel der Synchronisierkupplung S 1/2 in ihrer Schließlage B mit der mit der Eingangswelle 3, mittels der Synchronisierkupplung S 2/3 in ihrer Schießlage C mit der Ausgangswelle 5 verbunden, so daß ein direkter Durchtrieb ohne Übersetzungsänderung von der Eingangswelle 3 zur Ausgangswelle 5 erfolgt. Die übrigen Übersetzungen i1 bis i5 sind so gewählt, daß die Gänge G1 und G2 eine erwünschte größere Spreizung haben, als sie bei geometrischer Stufung mit gleichbleibendem Stufensprung ϕ möglich ist. Die progressive Gangstufung wird dadurch ermöglicht, daß eine erste Gruppenschaltung zwischen den Gängen G1 und G2 und eine zweite Gruppenschaltung zwischen den nicht benachbarten Gängen G3 und G5 realisiert ist.

Um die Synchronisierkupplungen in Schließlage bringen zu können, greifen in ihre Schiebemuffen 10 die Schaltgabeln 11, 12, 13 ein, die von einer Schaltwalze 14 betätigt werden. Die Schaltwalze 14 ist in herkömmlicher Weise ausgeführt und bewirkt mit Kurvenbahnen eine Axialverschiebung der Schaltgabeln. Die Schaltgabeln 11, 12 sind auf einer gehäusefesten Achse 15 längsverschieblich und drehbar gelagert und von der Schaltwalze 14 direkt über Stifte 16 verschiebbar. Auf der Achse 15 ist auch ein Mitnehmer 17 gelagert und von der Schaltwalze 14 über einen Stift 16 betätigbar. In eine Nut 18 des Mitnehmers 17 greift ein Kuppelfinger 19 ein. Der Kuppelfinger 19 ist an einer Welle 20 befestigt, auf der die Schaltstange 13 gelagert ist.

Soll die Synchronisierkupplung S 1/2 in ihrer mittleren Neutralstellung gebracht werden, um das Getriebe in Leerlauf zu schalten, so wird der Kuppelfinger 19 aus der Nut 18 ausgeschwenkt und in eine gehäusefeste Bogenführung 21 eingeschwenkt.

Sowohl die Nut 18 des Mitnehmers 17 als auch die Bogenführung 21 haben zueinander gerichtete V-förmige Öffnungen, welche beim Ausschwenken des Kuppelfingers 19 aus dem Mitnehmer 17 eine Axialverschiebung der Synchronisierkupplung S 1/2 in die Neutralstellung und beim Einschwenken eine Axialverschiebung in die jeweils von der Schaltwalze 14 vorbestimmte Schaltstellung bewirken. Somit kann, während sich das Getriebe in Neutralstellung befindet (Kuppelfinger ausgeschwenkt), durch Verdrehen der Schaltwalze 14 jeder beliebige Gang vorgewählt und durch Einschwenken des Kuppelfingers 19 geschaltet werden.

Das ausgeführte Gangschaltgetriebe benötigt für sechs Vorwärtsgänge vier Radpaare. Das Getriebe läßt sich beliebig erweitern, wobei jeweils durch Hinzufügen eines weiteren Radpaares zwei zusätzliche Getriebegänge darstellbar sind.

## Patentansprüche

1. Gangschaltgetriebe eines Kraftfahrzeugs mit mehreren durch Synchronisierkupplungen schaltbaren Getriebegängen, mit einer Schaltwalze (14), und mit den synchronisier kupplungen zugeordneten schiebemuffen (10), wobei jeweils Radpaare aus miteinander kämmenden Losrädern und Festrädern gebildet sind und die Getriebegänge durch Kuppeln der Losräder mit den zugehörigen Getriebewellen schaltbar sind, dadurch gekennzeichnet, daß der jeweilige Getriebgang durch gleichzeitiges Schließen zweier Synchronisierkupplungen schaltbar ist, daß die Schiebemuffen (10) der Synchronisierkupplungen (S 1/2, S 2/3, S4/5) von der Schaltwalze (14) betätigt sind und daß mindestens eine der Schiebemuffen (10) unabhängig von der jeweiligen Stellung der Schaltwalze (14) in Neutralstellung und umgekehrt aus der Neutralstellung in die von der Schaltwalze (14) vorgegebene Position einstellbar ist.

2. Gangschaltgetriebe nach Anspruch 1, dadurch gekennzeichnet, daß in die Schiebemuffen der Synchronisierkupplungen (S 1/2), S 2/3), S 4/5) Schaltgabeln (13, 12, 11) eingreifen, die von der Schaltwalze (14) betätigbar sind.

3. Gangschaltgetriebe nach Anspruch 1 und 2, dadurch gekennzeichnet, daß die in die Synchronisierkupplung (S 1/2) eingreifende eine Schaltgabel (13) von der sie betätigenden Schaltwalze (14) abkoppelbar ist.

4. Gangschaltgetriebe nach Anspruch 3, dadurch gekennzeichnet, daß die Schaltgabel (13) über einen Mitnehmer (17) und einen aus ihm ausrastbaren Kuppelfinger (19) mit der Schaltwalze (14) verbunden ist.

5. Gangschaltgetriebe nach Anspruch 4 und 5, dadurch gekennzeichnet, daß der Kuppelfinger (19) aus einer bogenförmigen Nut (18) des Mitnehmers (17) herausschwenkbar und in eine gehäusefeste Bogenführung (21) einschwenkbar ist.

6. Gangschaltgetriebe nach Anspruch 4, dadurch gekennzeichnet, daß der Kuppelfinger (19) und die Schaltgabel (13) auf einer gemeinsamen Welle (20) angeordnet sind.

7. Gangschaltgetriebe nach Anspruch 4, dadurch gekennzeichnet, daß der Mitnehmer (17) auf einer Achse (15) drehbar gelagert ist, auf der die weiterein Schaltgabeln (11, 12) drehbar und längsverschieblich gelagert sind, wobei der Mitnehmer (17) und die Schaltgabeln (11, 12) von der Schaltwalze über Stifte betätigbar sind.

8. Gangschaltgetriebe nach Anspruch 1, dadurch gekennzeichnet, daß die eine Synchronisierkupplung (S 1/2) beim Schalten aller Getriebegänge beteiligt ist, so daß sie bei jedem geschalteten Getriebegang entweder in der einen Schließlage (A) oder der anderen Schließlage (B) ist.

9. Gangschaltgetriebe nach einem der Ansprüche 1 bis 4, dadurch gekennzeichnet, daß die Schaltwalze (14) über ein Schrittschaltwerk manuell betätigbar ist.

10. Gangschaltgetriebe nach einem der Ansprüche 1 bis 4, dadurch gekennzeichnet, daß die Schaltwalze (14) mittels eines hydraulischen, pneumatischen oder elektrischen Servoantriebes betätigbar ist.

## Claims

1. A gear-change mechanism in a motor vehicle, with a plurality of gears which can be changed using synchronising couplings, and comprising a controller (14) and sliding sleeves (10) associated with the synchronising couplings, respective gear wheel pairs being formed by meshing loose wheels and rigid wheels, and the gears being changeable by coupling the loose wheels with the associated gear shafts, **characterised in that** the respective gear is changeable by simultaneous closing of two synchronising couplings, and the sliding sleeves (10) of the synchronising couplings (S 1/2, S 2/3, S4/5) are actuated by the controller (14), and at least one of the sliding sleeves (10) can be moved into neutral position independently of the respective position of the controller (14) and conversely can be moved from the neutral position into the position pre-determined by the controller (14).

2. A gear-change mechanism in accordance with claim 1, **characterised in that** selector forks (13, 12, 11) engage in the sliding sleeves of the synchronising couplings (S 1/2, S 2/3, S4/5), the forks being actuatable by the controller (14).

3. A gear-change mechanism in accordance with claims 1 and 2, **characterised in that** one selector fork (13) engaging in the synchronising coupling (S 1/2) can be uncoupled from the controller (14) which actuates it.

4. A gear-change mechanism in accordance with claim 3, **characterised in that** the selector fork (13) is connected to the controller (14) via a carrier (17) and a coupling finger (19) which can be disengaged from the said carrier.

5. A gear-change mechanism in accordance with claims 4 and 5, **characterised in that** the coupling finger (19) can be pivoted out of a curved groove (18) in the carrier (17) and can be pivoted into a curved guide (21) fixed on the casing.

6. A gear-change mechanism in accordance with claim 4, **characterised in that** the coupling finger (19) and the selector fork (13) are arranged on a common shaft (20).

7. A gear-change mechanism in accordance with claim 4, **characterised in that** the carrier (17) is rotatably mounted on a shaft (15) on which the further selector forks (11, 12) are mounted to be rotatable and longitudinally displaceable, the carrier (17) and the selector forks (11, 12) being actuatable by the controller via pins.

8. A gear-change mechanism in accordance with claim 1, **characterised in that** one synchronising coupling (S 1/2) participates in changing all the gears, so that for each engaged gear the said coupling is either in one closed position (A) or the other closed position (B).

9. A gear-change mechanism in accordance with one of claims 1 to 4, **characterised in that** the controller (14) is manually actuatable via a step-by-step system.

10. A gear-change mechanism in accordance with one of claims 1 to 4, **characterised in that** the controller (14) can be actuated by means of a hydraulic or pneumatic or electric servo-drive.

## Revendications

1. Boîte de vitesses d'un véhicule automobile comportant plusieurs rapports commutables au moyen d'accouplements de synchronisation, comportant un rouleau de commutation (14) et comportant des manchons coulissants (10) associés aux accouplements de synchronisation, des paires de roues étant formées de roues libres et de roues fixes engrenant entre elles et les rapports étant commutables par accouplement des roues libres avec les arbres de transmission correspondants, caractérisée en ce que chaque rapport est commutable par fermeture simultanée de deux accouplements de synchronisation, en ce que les manchons coulissants (10) des accouplements de synchronisation (S 1/2, S 2/3, S 4/5) sont actionnés par le rouleau de commutation (14) et en ce qu'au moins l'un des manchons coulissants (10) est réglable dans la position neutre, indépendamment de la position respective du rouleau de commutation (14) et inversement est réglable dans la position donnée par le rouleau de commutation (14), a partir de la position neutre.

2. Boîte de vitesses selon la revendication 1, caractérisée en ce que dans les manchons coulissants des accouplements de synchronisation (S 1/2, S 2/3, S 4/5) s'engagent des fourches de commutation (13, 12, 11), qui sont actionnables par le rouleau de commutation (14).

3. Boîte de vitesses selon les revendications 1 et 2, caractérisée en ce qu'une fourche de commutation (13) s'engageant dans l'accouplement de synchronisation (S 1/2) est désaccouplable du rouleau de commutation (14) qui l'actionne.

4. Boîte de vitesses selon la revendication 3, caractérisée en ce que la fourche de commutation (13) est reliée au rouleau de commutation (14), par un entraîneur (17) et un doigt d'accouplement (19) la décrochant de celui-ci.

5. Boîte de vitesses selon les revendications 4 et 5, caractérisée en ce que le doigt d'accouplement (19) peut être pivoté hors d'une rainure (18) en arc de l'entraîneur (17) et peut pivoter à l'intérieur d'un guidage en arc (21) solidaire du carter.

6. Boîte de vitesses selon la revendication 4, caractérisée en ce que le doigt d'accouplement (19) et la fourche de commutation (13) sont placés sur un arbre commun (20).

7. Boîte de vitesses selon la revendication 4, caractérisée en ce que l'entraîneur (17) est monté tournant sur un axe (15), sur lequel les autres fourches de commutation (11, 12) sont montées tournantes et coulissant longitudinalement, l'entraîneur (17) et les fourches de commutation (11, 12) étant actionnables par le rouleau de commutation, par l'intermédiaire de broches.

8. Boîte de vitesses selon la revendication 1, caractérisée en ce qu'un accouplement de synchronisation (S 1/2) participe à la commutation de tous les rapports, de manière qu'à chaque rapport commuté il se trouve soit dans une position de fermeture (A) soit dans l'autre position de fermeture (B).

9. Boîte de vitesses selon l'une des revendications 1 à 4, caractérisée en ce que le rouleau de commutation (14) est actionnable manuellement par un mécanisme pas à pas.

10. Boîte de vitesses selon l'une des revendications 1 à 4, caractérisée en ce que le rouleau de commutation (14) est actionnable au moyen d'un servomécanisme hydraulique, pneumatique ou électrique.
